(19) Europäisches Patentamt
European Patent Office
Office européen des brevets

(11) Veröffentlichungsnummer: **0 345 219 B1**

(12) # EUROPÄISCHE PATENTSCHRIFT

(45) Veröffentlichungstag der Patentschrift: **02.02.94**

(51) Int. Cl.[5]: **C09K 15/30**, D06P 1/642, D06P 3/52, D06M 13/322

(21) Anmeldenummer: **89810387.4**

(22) Anmeldetag: **24.05.89**

Die Akte enthält technische Angaben, die nach dem Eingang der Anmeldung eingereicht wurden und die nicht in dieser Patentschrift enthalten sind.

(54) **Wässrige Dispersion von 2-(2'-Hydroxyphenyl-)benzotriazolen.**

(30) Priorität: **31.05.88 CH 2056/88**
**05.08.88 CH 2981/88**

(43) Veröffentlichungstag der Anmeldung:
**06.12.89 Patentblatt 89/49**

(45) Bekanntmachung des Hinweises auf die Patenterteilung:
**02.02.94 Patentblatt 94/05**

(84) Benannte Vertragsstaaten:
**CH DE FR GB LI**

(56) Entgegenhaltungen:
**DE-A- 2 453 146**
**US-A- 3 383 241**

**CHEMICAL ABSTRACTS, Band 95, Nr. 24, Dezember 1981, Seiten 68-69, Zusammenfassung Nr. 205338z, Columbus, Ohio, US; & JP-A-81 82 830 (TOYOBO CO., LTD, MEISEI CHEMICAL WORKS LTD) 06-07-1981**

**CHEMICAL ABSTRACTS, Band 99, Nr. 24, Dezember 1983, Seite 108, Zusammenfassung Nr. 196968h, Columbus, Ohio, US; & JP-A-58 67 779 (TEIJIN LTD) 22-04-1983**

**CHEMICAL ABSTRACTS, Band 102, Nr. 20, Mai 1985, Seite 82, Zusammenfassung Nr. 168259q, Columbus, Ohio, US; & JP-A-59 216 979 (SANYO CHEMICAL INDUSTRIES, LTD) 07-12-1984**

**DERWENT FILE SUPPLIER WPI(L), no. 88-047427[07], 1988, Derwent Publications Ltd, Londen, GB; & JP-A-63 006 182 (MITSUBISHI RAYON K.K.) 12-01-1988**

(73) Patentinhaber: **CIBA-GEIGY AG**
**Klybeckstrasse 141**
**CH-4002 Basel(CH)**

(72) Erfinder: **Jöllenbeck, Martin, Dr.**
**Guntramstrasse 39**
**D-7800 Freiburg(DE)**
Erfinder: **Berendt, Hans-Ulrich**
**Langgartenweg 25**
**CH-4123 Allschwil(CH)**
Erfinder: **Fringeli, Werner, Dr.**
**In den Kurzen 2**
**CH-4242 Laufen(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die vorliegende Erfindung betrifft eine wässrige Dispersion von als UV-Absorber verwendbaren 2-(2'-Hydroxyphenyl-)benzotriazolen und ihre Verwendung beim Färben von Synthesefasern, insbesondere Polyesterfasern oder säuremodifizierten Polyesterfasern.

Die erfindungsgemässe Dispersion ist dadurch gekennzeichnet, dass sie

(a) 15 bis 50 Gewichtsprozent einer Benzotriazolverbindung der Formel

(1) 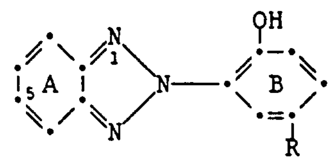

worin R Halogen, $C_1$-$C_{12}$-Alkyl, Niederalkoxy, Niederalkoxycarbonyl, Cycloalkyl, Aryl, $C_1$-$C_{12}$-Alkylaryl oder Aralkyl bedeutet, und die Ringe A und B, unabhängig voneinander, durch Halogen, Hydroxy, Niederalkyl, Niederalkoxy oder Niederalkoxycarbonyl weiter substituiert sein können, und

(b) 2 bis 20 Gewichtsprozent eines sauren Esters oder dessen Salzes eines Alkylenoxidadduktes der Formel

(2) 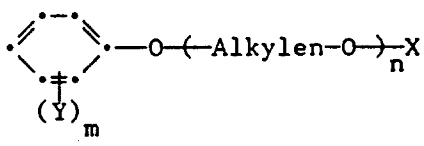

worin X den Säurerest einer anorganischen, Sauerstoff enthaltenden Säure, wie z.B. Schwefelsäure oder vorzugsweise Phosphorsäure, oder auch den Rest einer organischen Säure und

Y $C_1$-$C_{12}$-Alkyl, Aryl oder Aralkyl bedeuten,

"Alkylen" für den Ethylenrest oder Propylenrest steht, und

m 1 bis 4 und n 4 bis 50 sind,

enthält.

Aus der JP-A-81/82830 und der DE-A-24 53 146 sind Dispersionen bekannt, die sich von den erfindungsgemässen Dispersionen in charakteristischer Weise dadurch unterscheiden, dass die Dispersionen wasserfrei sind, und der Polyäthylenglykoläther einen Cyclohexylphenylrest enthält oder die Dispersion als Komponenten einen UV-Absorber und gegebenenfalls einen Dispergator oder Emulgator enthält. Aus der JP-A-84/216 979 sind Dispersionen bekannt, die drei Komponenten, von denen zwei ionisch sind, enthalten. Aus der GB-A-2 187 746 sind ähnliche wässrige Mittel bekannt, die anstelle der Komponente der Formel (2) der vorliegenden Erfindung das salzfreie Kondensationsprodukt eines sulfonierten Tolyläthers und Formaldehyd enthalten. Gegenüber der Dispersion der GB-A zeichnen sich die erfindungsgemässen Dispersionen durch vorteilhafte Eigenschaften aus.

Vorteilhafterweise enthält die erfindungsgemässe wässrige Dispersion 20 bis 40 Gewichtsprozent der Komponente (a) und 2 bis 15 Gewichtsprozent, vorzugsweise 2 bis 10 Gewichtsprozent der Komponente (b). Komponente (a) hat zweckmässigerweise eine Partikelgrösse unter 5 $\mu$m.

Sowohl Komponente (a) als auch Komponente (b) können als Einzelverbindung oder in Form eines Gemisches vorhanden sein.

Niederalkyl und Niederalkoxy stellen bei der Definition der Reste der Verbindungen der Formeln (1) und (2) solche Gruppen oder Gruppenbestandteile dar, die 1 bis 5, insbesondere 1 bis 3 Kohlenstoffatome aufweisen. Beispiele für derartige Gruppen sind Methyl, Ethyl, n-Propyl, Isopropyl, n-Butyl, Isobutyl, sek.Butyl, tert.Butyl, Amyl, Isoamyl oder tert.Amyl bzw. Methoxy, Ethoxy, Isopropoxy, Isobutoxy oder tert.Butoxy.

Halogen bedeutet beispielsweise Fluor, Brom oder vorzugsweise Chlor.

Stellt der Substituent R in Formel (1) und Y in Formel (2) eine Alkylgruppe dar, so kann sie geradkettig oder verzweigt sein. Beispiele solcher Alkylreste sind Methyl, Ethyl, n-Propyl, Isopropyl, n-Butyl, Isobutyl, sek.Butyl, tert.Butyl, Amyl, Isoamyl, tert.Amyl, n-Hexyl, 2-Ethylhexyl, n-Heptyl, n-Octyl, Isooctyl, n-Nonyl, Isononyl oder n-Dodecyl.

Beispiele für Cycloalkyl in der Bedeutung von R sind Cyclopentyl, Cycloheptyl oder vorzugsweise Cyclohexyl. Die Cycloalkylreste können einen oder mehrere $C_1$-$C_4$-Alkylreste, vorzugsweise Methylgruppen, enthalten und weisen insgesamt 5 bis 10 Kohlenstoffatome auf.

Sowohl für R in Formel (1) als auch für Y in Formel (2) bedeutet "Aryl" zweckmässigerweise Phenyl. Der Phenylrest kann durch Halogen, Niederalkyl, wie Methyl, oder Niederalkoxy, wie Methoxy, einfach oder zweifach substituiert sein.

Bedeutet R Alkylaryl, so ist es vorteilhafterweise Alkylphenyl und der Alkylrest befindet sich vorzugsweise in para-Stellung. Die Alkylreste im Alkylphenyl können Methyl, Ethyl, Isopropyl, Butyl, Hexyl, n-Octyl, tert.Octyl, n-Nonyl, Iso-Nonyl, Decyl oder Dodecyl sein.

R und Y in der Bedeutung von Aralkyl weisen vorteilhafterweise insgesamt 7 bis 9 Kohlenstoffatome auf und stehen in der Regel für Benzyl, $\alpha$-Methylbenzyl, $\alpha,\alpha$-Dimethylbenzyl, $\beta$-Phenethyl, $\alpha$-Tolylethyl oder Phenisopropyl.

Der Substituent R in Formel (1) ist vorzugsweise Niederalkyl. Der Substituent Y in Formel (2) ist vorteilhafterweise $C_4$-$C_{12}$-Alkyl, Benzyl, vorzugsweise $C_4$-$C_{10}$-Alkyl oder besonders $\alpha$-Methylbenzyl.

Der Ring A ist vorzugsweise in 5-Stellung durch Halogen, Niederalkyl oder Niederalkoxy substituiert. Vorteilhafterweise kann der Ring A einen weiteren Substituenten, wie z.B. Halogen oder Methyl in 6-Stellung aufweisen.

Der Benzolring B ist ebenfalls vorzugsweise in Nachbarstellung zur Hydroxylgruppe z.B. durch Niederalkyl oder Halogen weitersubstituiert.

n ist bevorzugt 8 bis 30, während m vorzugsweise 1 bis 3 ist.

$$(\text{Alkylen-O})_n\text{—Ketten}$$

sind bevorzugt vom Ethylenglykol-, Propylenethylenglykol oder Ethylenpropylenglykol-Typus; besonders bevorzugt ist erstere.

Der Säurerest X leitet sich beispielsweise von niedermolekularen Dicarbonsäuren ab, wie z.B. von Maleinsäure, Bernsteinsäure oder Sulfobernsteinsäure, und ist über eine Esterbrücke mit dem Alkylenoxyteil des Moleküls verbunden. Insbesondere leitet sich X jedoch von anorganischen mehrbasischen Säuren, wie Schwefelsäure oder insbesondere Orthophosphorsäure ab.

Der Säurerest X kann als freie Säure oder in Salzform, d.h. z.B. als Alkalimetall-, Erdalkalimetall-, Ammonium- oder Aminsalz, vorliegen. Beispiele für solche Salze sind Lithium-, Natrium, Kalium-, Magnesium-, Calcium-, Barium-, Ammonium-, Trimethylamin-, Diethylamin-, Ethanolamin-, Diethanolamin- oder Triethanolaminsalze. Bevorzugt sind Alkalimetallsalze oder vor allem Triethanolaminsalze. Die Mono- bzw. Diethanolaminsalze können noch weiter mit 1 bis 25 Oxethylen-Einheiten verethert sein.

Praktisch wichtige Komponenten (a) entsprechen der Formel

(3) 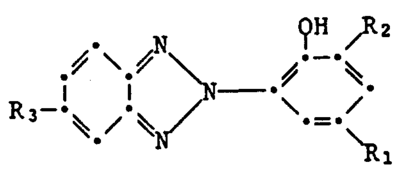

worin $R_1$ Halogen, Niederalkyl oder Niederalkoxy und $R_2$ und $R_3$, unabhängig voneinander, je Wasserstoff, Halogen, Niederalkyl oder Niederalkoxy bedeuten.

Unter den Benzotriazolverbindungen der Formel (3) sind diejenigen, in denen $R_1$ Niederalkyl wie Methyl oder tert.Butyl, $R_2$ Wasserstoff oder Niederalkyl und $R_3$ Wasserstoff, Chlor oder Methyl bedeuten, bevorzugt.

Im Vordergrund des Interesses stehen 2-(2'-Hydroxy-5'-methylphenyl)-benzotriazol, 2-(2'-Hydroxy-3',5'-dimethylphenyl)-benzotriazol, 2-(2'-Hydroxy-5-tert.butylphenyl)-benzotriazol, 2-(2'-Hydroxy-3'-tert.butyl-5'-methylphenyl)-5-chlorbenzotriazol, 2-(2'-Hydroxy-3'-5'-di-tert.butylphenyl)-5-chlor-benzotriazol, 2-(2'-Hydroxy-5'-tert.octylphenyl)-benzotriazol, 2-(2'-Hydroxy-3',5'-di-tert.amylphenyl)-benzotriazol oder 2-(2'-Hydroxy-3',5-di-tert.butylphenyl)-benzotriazol.

Die als UV-absorbierend bekannten Benzotriazolverbindungen der Formeln (1) und (3) sind grösstenteils in der FR-A-1 195 307 beschrieben.

Bevorzugte saure Ester der Komponente (b) entsprechen der Formel

(4) 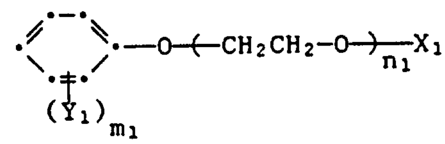

worin $Y_1$ $C_4$-$C_{12}$-Alkyl, Phenyl, Tolyl, Tolyl-$C_1$-$C_3$-alkyl oder Phenyl-$C_1$-$C_3$-alkyl, wie z.B. Benzyl, $\alpha$-Methyl- oder $\alpha$,$\alpha$-Dimethylbenzyl bedeutet, $X_1$ ein Säurerest ist, der sich von Schwefelsäure oder vorzugsweise Orthophosphorsäure ableitet, und
$m_1$ 1 bis 3 und $n_1$ 4 bis 40 sind.

Diese sauren Ester liegen vorzugsweise als Natrium-, Kalium, Ammonium-, Diethylamin-, Triethylamin, Diethanolamin- oder Triethanolaminsalze vor.

Die als Kompomente (b) in Frage kommenden sauren Ester der Formel (2) oder (4) werden hergestellt, indem man Alkylenoxyd (Ethylenoxid oder Propylenoxid) an eine definitionsgemäss substituierte Phenolverbindung anlagert und das Anlagerungsprodukt mit einer mehrbasischen Sauerstoffsäure oder einem funktionellen Derivat dieser Säure, wie z.B. Säureanhydride, Säurehalogenide, Säureester oder Säureamide in die sauren Ester und gegebenenfalls den erhaltenen sauren Ester in die obengenannten Salze überführt. Als Beispiele dieser funktionellen Derivate seien Phosphorpentoxid, Phosphoroxytrichlorid, Chlorsulfonsäure oder Sulfaminsäure genannt. Sowohl die Alkylenoxidanlagerung als auch die Veresterung können nach bekannten Methoden durchgeführt werden.

Gut geeignete Komponenten (b) sind saure Ester oder deren Salze eines Polyadduktes von 4 bis 40 Mol Ethylenoxid an 1 Mol eines Phenols, das mindestens eine $C_4$-$C_{12}$-Alkylgruppe, eine Phenylgruppe, eine Tolylgruppe, eine $\alpha$-Tolylethylgruppe, eine Benzylgruppe, eine $\alpha$-Methylbenzylgruppe oder eine $\alpha$,$\alpha$-Dimethylbenzylgruppe aufweist, wie z.B. Butylphenol, Tributylphenol, Octylphenol, Nonylphenol, Dinonylphenol, o-Phenylphenol, Benzylphenol, Dibenzylphenol, $\alpha$-Tolylethylphenol, Dibenzyl-(nonyl)-phenol, $\alpha$-Methylbenzylphenol, Bis-($\alpha$-Methylbenzyl)-phenol oder Tris-($\alpha$-methylbenzyl)-phenol, wobei diese sauren Ester einzeln oder in Mischung verwendet werden können.

Von besonderem Interesse sind saure Phosphorsäureester der Addukte von 8 bis 30 Mol, vorzugsweise 12 bis 20 Mol Ethylenoxid an 1 Mol 4-Nonylphenol oder Dinonylphenol oder besonders an 1 Mol von Verbindungen, die durch Anlagerung von 1 bis 3 Mol von Styrolen an 1 Mol Phenole hergestellt werden, wobei die Phosphorsäureester zweckmässigerweise als Gemische der entsprechenden Salze eines Mono- und Diesters vorhanden sind.

Die Herstellung der Styrolanlagerungsprodukte erfolgt in bekannter Weise vorzugsweise in Gegenwart von Katalysatoren, wie Schwefelsäure, p-Toluolsulfonsäure oder vor allem Zinkchlorid. Als Styrole kommen zweckmässigerweise Styrol, $\alpha$-Methylstyrol oder Vinyltoluol (4-Methylstyrol) in Betracht. Beispiele für die Phenole sind Phenol, Kresole oder Xylenole.

Ganz besonders bevorzugt sind saure Phosphorsäureester (Mono- und Diester) oder deren Salze von Oxalkylierungsprodukten der Formel

(5) 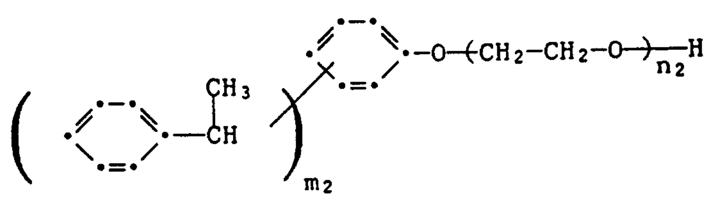

worin $m_2$ 1 bis 3 und $n_2$ 12 bis 30, vorzugsweise 12 bis 20 bedeuten.

Als Beispiele für Oxalkylierungsprodukte der Formeln (4) und (5) seien im einzelnen genannt:

- Oxalkylierungsprodukt mit 18 Ethylenoxideinheiten des Anlagerungsproduktes von 2 Mol Styrol an 1 Mol Phenol
- Oxalkylierungsprodukt mit 18 Ethylenoxideinheiten des Anlagerungsproduktes von 3 Mol Styrol an 1 Mol Phenol
- Oxalkylierungsprodukt mit 27 Ethylenoxideinheiten des Anlagerungsproduktes von 2 Mol 4-Methylstyrol an 1 Mol Phenol

- Oxalkylierungsprodukt mit 17 Ethylenoxideinheiten des Anlagerungsproduktes von 3 Mol 4-Methylstyrol an 1 Mol Phenol
- Oxalkylierungsprodukt mit 18 Ethylenoxideinheiten des Gemisches aus einem Anlagerungsprodukt von 2 Mol Styrol an 1 Mol Phenol und einem Anlagerungsprodukt von 3 Mol Styrol an 1 Mol Phenol
- Oxalkylierungsprodukt mit 13 Ethylenoxideinheiten des Gemisches aus einem Anlagerungsprodukt von 2 Mol Styrol an 1 Mol Phenol und einem Anlagerungsprodukt von 3 Mol Styrol an 1 Mol Phenol.

Besonders bevorzugt sind Dispersionen, worin die Komponente (b) das Triethanolamin-, Kalium- oder Natriumsalz eines sauren Phosphorsäureesters des Oxalkylierungsproduktes von 12 bis 18 Mol Ethylenoxid an 1 Mol einer Verbindung ist, die durch Anlagerung von 1 bis 3 Mol Styrol an 1 Mol Phenol hergestellt worden ist.

Ausser den Komponenten (a) und (b) enthält die erfindungsgemässe Dispersion zweckmässig zusätzlich als Komponente (c) ein Stabilisierungs- oder Verdickungsmittel. Ein solcher Zusatz dient dazu, die Viskosität der Dispersion einzustellen.

Als Komponente (c) eignen sich insbesondere Carboxylgruppen enthaltende Polymerisate. Diese werden in Form von 0,5 bis 10 %igen, vorzugsweise 0,5 bis 5 %igen wässrigen Lösungen oder Dispersionen, bezogen auf die Lösung oder Dispersion eingesetzt.

Diese Polymerisate stellen vorteilhafterweise polymerisierte ethylenisch ungesättigte Mono- oder Dicarbonsäuren von 3 bis 5 Kohlenstoffatomen, wie z.B. Polyacrylsäure oder Polymerisate von Methacrylsäure, Crotonsäure, Itaconsäure, Teraconsäure, Maleinsäure bzw. deren Anhydrid, Fumarsäure, Citraconsäure oder Mesaconsäure, Copolymerisate aus Olefinen, z.B. Ethylen oder Propylen, Diketene, Acrylsäureestern, Methacrylsäureestern oder Acrylamiden und den vorgenannten Monomeren einschliesslich der Acrylsäure oder Copolymerisate der Acrylsäure mit Methacrylsäure, Methacrylnitril oder Vinylmonomeren, wie z.B. Vinylphosphonsäure, Copolymerisate aus Maleinsäure und Styrol, Maleinsäure und einem Vinylether oder Maleinsäure und einem Vinylester z.B. Vinylacetat dar.

Die Verdickungsmittel bildenden carboxylgruppenhaltigen Polymerisate können ein Molekulargewicht von 0,5 bis 6 Millionen haben.

Als besonders brauchbare Komponenten (c) haben sich Lösungen von Polyacrylsäure oder auch Copolymerisate aus Acrylsäure und Acrylamid gezeigt, wobei das entsprechende Molekulargewicht von 0,5 bis 6 Millionen schwanken kann. Die Copolymerisate weisen vorteilhafterweise ein Molverhältnis Acrylsäure:Acrylamid von 1:0,8 bis 1:1,2 auf. Als Komponente (c) kann ebenfalls ein teilweise hydrolysiertes Polymaleinsäureanhydrid verwendet werden. Dieses liegt in der Regel teilweise in Form eines wasserlöslichen Salzes vor und besitzt ein Molgewicht, das vorzugsweise zwischen 300 und 5000 liegt.

Weitere als Komponente (c) brauchbare Verdickungsmittel sind Polysaccharide, wie z.B. Carboxymethylcellulose, Methylcellulose, Methylhydroxyethylcellulose, Johannisbrotkernmehlether oder Stärkeether sowie Alginate, Polyethylenglykole, Polyvinylpyrrolidone, Polyvinylalkohole oder auch feinverteilte Kieselsäure vorzugsweise mit spezifischer Oberfläche von 50 bis 380 $m^2/g$ und Schichtsilikate, wie z.B. Bentonite, Bentone, Smektite, Montmorillonite. Gut geeignet sind auch anionische Heteropolysaccharide, die aus den Monosacchariden Glukose und Mannose und Glucuronsäure gebildet sind.

Die Mengen dieser als Komponente (c) Zusatzbestandteile liegen im allgemeinen von 0,05 bis 8 Gewichtsprozent, vorzugsweise 0,1 bis 4 Gewichtsprozent, bezogen auf die gesamte wässrige Dispersion vor.

Neben den Komponenten (a) und (b) oder (a), (b) und (c) enthält die erfindungsgemässe Dispersion vorzugsweise nichtionische Tenside oder vorteilhafterweise auch weitere von der Komponente (b) verschiedene anionische Verbindungen. Ebenso kann die erfindungsgemässe wässrige Dispersion noch zusätzlich Antischaummittel, Konservierungsmittel oder Gefrierschutzmittel enthalten.

Das nichtionogene Tensid ist vorteilhafterweise ein nichtionogenes Alkylenoxydanlagerungsprodukt von 1 bis 100 Mol Alkylenoxyd, z.B. Ethylenoxyd und/oder Propylenoxyd, an 1 Mol eines aliphatischen Monoalkohols mit mindestens 4 Kohlenstoffatomen, eines 3- bis 6-wertigen aliphatischen Alkohols, eines gegebenenfalls durch Alkyl, Phenyl, $\alpha$-Tolylethyl, Benzyl, $\alpha$-Methylbenzyl oder $\alpha,\alpha$-Dimethylbenzyl substituierten Phenols oder einer Fettsäure mit 8 bis 22 Kohlenstoffatomen.

Als nichtionogene Tenside seien beispielsweise genannt:

- Fettalkohole mit 8 bis 22 Kohlenstoffatomen, vor allem Cetylalkohol;
- Anlagerungsprodukte von vorzugsweise 2 bis 80 Mol Alkylenoxyd, insbesondere Ethylenoxyd, wobei einzelne Ethylenoxydeinheiten durch substituierte Epoxyde, wie Styroloxyd und/oder Propylenoxyd, ersetzt sein können, an höhere ungesättigte oder gesättigte Monoalkohole, Fettsäuren, Fettamine oder Fettamide mit 8 bis 22 Kohlenstoffatomen oder an Benzylalkohole, Phenylphenole, Benzylphenole, $\beta$-Phenethylphenole, $\alpha$-Methylbenzylphenole, $\alpha,\alpha$-Dimethylbenzylphenole, $\alpha$-Tolylethylphenole oder Alkylphenole, deren Alkylreste mindestens 4 Kohlenstoffatome aufweisen;

- Alkylenoxyd-, insbesondere Ethylenoxyd- und/oder Propylenoxyd-Kondensationsprodukte (Blockpolymerisate);
- Ethylenoxyd-Propylenoxyd-Addukte an Diamine, vor allem Ethylendiamin;
- Umsetzungsprodukte aus einer 8 bis 22 Kohlenstoffatome aufweisenden Fettsäure und einem primären oder sekundären, mindestens eine Hydroxyniederalkyl- oder Niederalkoxyniederalkylgruppe aufweisenden Amin oder Alkylenoxyd-Anlagerungsprodukte dieser hydroxyalkylgruppenhaltigen Umsetzungsprodukte, wobei die Umsetzung so erfolgt, dass das molekulare Mengenverhältnis zwischen Hydroxyalkylamin und Fettsäure 1:1 und grösser als 1, z.B. 1:1 bis 2:1 sein kann;
- Sorbitanester vorzugsweise mit langkettigen Estergruppen oder ethoxylierte Sorbitanester, wie z.B. Polyoxethylen-Sorbitanmonolaurat mit 4 bis 10 Ethylenoxideinheiten oder Polyoxethylen-Sorbitantrioleat mit 4 bis 20 Ethylenoxideinheiten;
- Anlagerungsprodukte von Propylenoxyd an einen drei- bis sechswertigen aliphatischen Alkohol von 3 bis 6 Kohlenstoffatomen, z.B. Glycerin oder Pentaerythrit, wobei die Polypropylenoxyaddukte ein durchschnittliches Molekulargewicht von 250 bis 1800, vorzugsweise 400 bis 900, aufweisen; und
- Fettalkoholpolyglykolmischether, insbesondere Anlagerungsprodukte von 3 bis 30 Mol Ethylenoxid und 3 bis 30 Mol Propylenoxid an aliphatische Monoalkohole von 8 bis 22 Kohlenstoffatomen, vorzugsweise Alkanole von 8 bis 16 Kohlenstoffatomen.

Davon sind obengenannte von Styrolanlagerungsprodukten abgeleitete Oxalkylierungsprodukte der Formel (5) als nichtionische Tenside besonders bevorzugt.

Als zusätzliche von der Komponente (b) verschiedene anionische Verbindungen kommen beispielsweise

- sulfatierte ungesättigte Fettsäuren oder Fettsäureniederalkylester, die im Fettrest 8 bis 20 Kohlenstoffatome aufweisen, z.B. Rizinolsäure und solche Fettsäuren enthaltende Oele, z.B. Rizinusöl;
- Alkylarylsulfonate mit einer oder zwei geradkettigen oder verzweigten Alkylketten mit insgesamt mindestens 6 Kohlenstoffatomen, z.B. Dodecylbenzolsulfonate, Dibutylnaphthalinsulfonate oder 3,7-Diisobutylnaphthalinsulfonate;
- sulfonierte 1-Benzyl-2-alkylbenzimidazole mit 8 bis 22 Kohlenstoffatomen im Alkylrest;
- Sulfonate von Polycarbonsäureestern, z.B. Dihexylsulfosuccinate, Di-2-ethylhexylsulfosuccinate, Dioctylsulfosuccinate oder Sulfosuccinamide;
- die mit einer organischen Dicarbonsäure, wie z.B. Maleinsäure, Malonsäure oder Sulfobernsteinsäure, vorzugsweise jedoch mit einer anorganischen mehrbasischen Säure, wie z.B. o-Phosphorsäure oder insbesondere Schwefelsäure in einen sauren Ester übergeführten Anlagerungsprodukte von 1 bis 60, vorzugsweise 2 bis 30 Mol, Ethylenoxid und/oder Propylenoxid an Fettamine, Fettamide, Fettsäuren oder Fettalkohole je mit 8 bis 22 Kohlenstoffatomen oder an drei- bis sechswertige Alkanole mit 3 bis 6 Kohlenstoffatomen;
- Ligninsulfonate, Kondensationsprodukte von Ditolylethersulfonaten und Formaldehyd, Kondensationsprodukte von Naphthalinsulfonsäure und/oder Naphthol- oder Naphthylaminsulfonsäuren mit Formaldehyd, Kondensationsprodukte von Phenolsulfonsäuren und/oder sulfoniertem Dihydroxydiphenylsulfon und Phenolen bzw. Kresolen mit Formaldehyd und/oder Harnstoff in Betracht.

Der Säurerest dieser anionischen Verbindungen liegt in der Regel in Salzform, d.h. als Alkalimetall-, Ammonium- oder Aminsalz vor. Beispiele für solche Salze sind Lithium-, Natrium-, Kalium-, Ammonium-, Trimethylamin-, Aethanolamin-, Diethanolamin- oder Triethanolaminsalze.

Als Antischaummittel können die erfindungsgemässen Dispersionen Silikonöle sowie auch Entschäumer auf der Basis von Tributylphosphat oder 2-Ethylhexanol enthalten.

Bevorzugte Antischaummittel sind Alkylendiamide. Diese entsprechen zweckmässigerweise der Formel

(6) $V_1{-}CO{-}NH{-}Q{-}NH{-}CO{-}V_2$

in der $V_1$ und $V_2$, unabhängig voneinander, je einen aliphatischen Rest mit 9 bis 23 Kohlenstoffatomen und Q einen Alkylenrest mit 1 bis 8, vorzugsweise 1, 2 oder 3 Kohlenstoffatomen bedeuten.

Das Alkylendiamid kann als Einzelverbindung oder in Form eines Gemisches vorhanden sein.

Die aliphatischen Reste $V_1$ und $V_2$ können geradkettig oder verzweigt sein. Sie stellen zusammen mit der CO-Gruppe vorteilhafterweise den Säurerest einer ungesättigten oder vorzugsweise gesättigten aliphatischen Carbonsäure mit 10 bis 24 Kohlenstoffatomen dar. Als aliphatische Carbonsäuren seien beispielsweise Caprin-, Laurin-, Kokosfett-, Myristin-, Palmkernfettsäure, Palmitin-, Talgfett-, Oel-, Ricinolein-, Linol-, Linolen-, Stearin-, Arachin-, Arachidon-, Behen-, Eruca- oder Lignocerinsäure genannt. Behensäure und besonders Stearinsäure sind bevorzugt.

Es können auch Gemische dieser Säuren verwendet werden, wie sie bei der Spaltung von natürlichen Oelen oder Fetten gewonnen werden. Kokosfettsäure, Palmkernfettsäure, Palmitin-/Stearinsäuregemische, Talgfettsäure und Arachin-/Behensäuregemische sind besonders bevorzugte Gemische.

Vorzugsweise bedeuten $V_1$ und $V_2$ jeweils einen Alkylrest mit 9 bis 23 Kohlenstoffatomen und insbesondere mit 15 bis 21 Kohlenstoffatomen.

Q stellt insbesondere eine Alkylengruppe dar, die 2 bis 5 Kohlenstoffatome enthält und geradkettig oder verzweigt sein kann. Es handelt sich beispielsweise um die $-CH_2CH_2-$, $-CH_2CH_2CH_2-$,

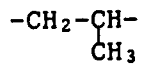

oder

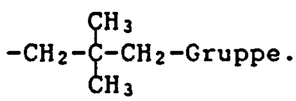

Typische Vertreter für Alkylendiamide als Antischaummittel sind Methylenbis-stearinsäureamid, Ethylen-bis-stearinsäureamid oder Ethylen-bis-behensäureamid.

Das Alkylendiamid ist vorzugsweise in einer Menge von 0,2 bis 3 Gewichtsprozent in der Dispersion vorhanden.

Als Konservierungsmittel, die in den erfindungsgemässen Dispersionen enthalten sein können, können die verschiedensten handelsüblichen Produkte, wie wässrige Lösungen von Formaldehyd, 6-Acetoxy-2,4-dimethyldioxan, 1,2-Benzisothiazolin-3-on und besonders 2-Chloracetamid in Betracht kommen.

Als Gefrierschutzmittel, die den erfindungsgemässen Dispersionen zur Erhaltung der Fliessfähigkeit bei tiefen Temperaturen und zur Verhinderung des Ausfrierens von Wasser zugesetzt werden können, seien Glykole oder Polyole, wie z.B. Ethylenglykol, Propylenglykol bzw. Glyzerin sowie Polyethylenglykole, wie z.B. Di-, Tri- oder Tetraethylenglykol genannt. Ein bevorzugtes Antifrostmittel ist Propylenglykol.

Die erfindungsgemässen wässrigen Dispersionen enthalten mit Vorteil, jeweils bezogen auf die gesamte Dispersion

15-50 Gewichtsprozent der Komponente (a),
2-20 Gewichtsprozent der Komponente (b),
0- 6, vorzugsweise 0,1 bis 4 Gewichtsprozent der Komponente (c),
0-20, vorzugsweise 5 bis 15, Gewichtsprozent nichtionogenes Tensid,
0- 8 Gewichtsprozent der weiteren, von der Komponente (b) verschiedenen anionischen Komponente,
0- 3 Gewichtsprozent Antischaummittel,
0- 1 Gewichtsprozent Konservierungsmittel und
0-20 Gewichtsprozent Gefrierschutzmittel.

Die Herstellung der erfindungsgemässen Dispersion erfolgt zweckmässigerweise, indem man die Benzotriazolverbindung der Formel (1), den sauren Ester der Formel (2) und Wasser in einem Mischer anteigt und nach allfälliger Zugabe der erwünschten Zusatzbestandteile wie nichtionische Tenside, weitere anionische Verbindungen einschliesslich der Dispergiermittel, Antischaummittel, Konservierungsmittel und Gefrierschutzmittel 1 bis 30, vorzugsweise 1 bis 10 Stunden lang dispergiert. Die Dispergierung wird vorteilhafterweise durch Einwirkung von hohen Scherkräften z.B. durch Mahlen in einer Kugel-, Sand- oder Perlmühle durchgeführt. Nach dem Mahlen kann eine wässrige Lösung des Stabilisierungs- oder Verdikkungsmittels (Komponente (c)) und gewünschtenfalls noch Wasser zugesetzt werden, worauf bis zur gleichmässigen Verteilung gerührt wird.

Die erfindungsgemässen Dispersionen zeichnen sich durch gute Transport- und Lagerstabilität aus. Sie sind insbesondere sehr stabil bei höheren Temperaturen bis zu 130 °C, wenn sie in Färbebädern eingesetzt werden.

Verwendung findet die erfindungsgemässe Dispersion je nach dem Farbstoff beim Färben von Synthesefasern, insbesondere Polyesterfasern oder auch sauer modifizierten Polyesterfasern enthaltendem Textilmaterial. Das Färbeverfahren wird jeweils in üblicher Weise durchgeführt. Die erfindungsgemässe Dispersion wird in ein vorgeschärftes wässriges Bad langsam unter Rühren eingetragen, wonach die Flotte nach dem Zusatz vom Farbstoff zum Färben bereitgestellt ist.

Gegenstand der vorliegenden Erfindung ist demnach auch ein Verfahren zum Färben von synthetischem Fasermaterial mit kationischen oder Dispersionsfarbstoffen. Das Verfahren ist dadurch gekennzeichnet, dass man dieses Material in Gegenwart der erfindungsgemässen Hilfsmitteldispersion färbt.

Die Einsatzmengen, in denen die erfindungsgemässe Hilfsmitteldispersion den Färbebädern zugesetzt wird, bewegen sich von 0,5 bis 10 %, vorzugsweise 1 bis 5 % vom Warengewicht.

Als Fasermaterial, insbesondere Textilmaterial, das in Gegenwart des neuen als Lichtschutzmittel verwendeten Hilfsmittelgemisches gefärbt werden kann, sind z.B. Celluloseesterfasern, wie Cellulose-2 1/2-acetatfasern und -triacetatfasern, aromatische Polyamidfasern, die sich z.B. von Poly-(metaphenylen-isophthalamid) ableiten, sauer modifizierte Polyesterfasern und besonders lineare Polyesterfasern zu erwähnen. Dabei werden Celluloseester- und Polyesterfasern bevorzugt mit Dispersionsfarbstoffen und sauer modifizierte Polyesterfasern und aromatische Polyamidfasern bevorzugt mit kationischen Farbstoffen gefärbt.

Unter linearen Polyesterfasern sind dabei Synthesefasern zu verstehen, die z.B. durch Kondensation von Terephthalsäure mit Ethylenglykol oder von Isophthalsäure oder Terephthalsäure mit 1,4-Bis-(hydroxymethyl)-cyclohexan erhalten werden, sowie Mischpolymere aus Terephthal- und Isophthalsäure und Ethylenglykol. Der in der Textilindustrie bisher fast ausschliesslich eingesetzte lineare Polyester besteht aus Terephthalsäure und Ethylenglykol. Sauer modifizierte Polyesterfasern sind beispielsweise Polykondensationsprodukte von Terephthalsäure oder Isophthalsäure, Ethylenglykol und 1,2-Dihydroxy-3-beziehungsweise 1,3-Dihydroxy-2-(3-natriumsulfopropoxy)-propan, 2,3-Dimethylol-1-(natriumsulfopropoxy)-butan, 2,2-Bis-(3-natriumsulfopropoxyphenyl)-propan oder 3,5-Dicarboxybenzolsulfonsäure bzw. sulfonierter Terephthalsäure, sulfonierter 4-Methoxybenzolcarbonsäure oder sulfonierter Diphenyl-4,4'-dicarbonsäure.

Die Fasermaterialien können auch als Mischgewebe unter sich oder mit anderen Fasern, z.B. Mischungen aus Polyacrylnitril/Polyester, Polyamid/Polyester, Polyester/Baumwolle, Polyester/Viskose und Polyester/Wolle, verwendet werden.

Das zu färbende Textilmaterial kann sich in verschiedenen Verarbeitungsstadien befinden. Beispielsweise kommen in Betracht: loses Material, Stückware, wie Gewirke oder Gewebe, Garn in Wickel- oder Muff-Form. Letztere können Wickeldichten von 200 bis 600 g/dm$^3$, insbesondere 400 bis 450 g/dm$^3$, aufweisen.

Die für das erfindungsgemässe Verfahren geeigneten kationischen Farbstoffe können verschiedenen Farbstoffklassen angehören. Insbesondere handelt es sich um die gebräuchlichen Salze, beispielsweise Chloride, Sulfate oder Metallhalogenide, wie z.B. Zinkchloriddoppelsalze von kationischen Farbstoffen, deren kationischer Charakter z.B. von einer Carbonium-, Oxonium-, Sulfonium- oder vor allem Ammoniumgruppe herrührt. Beispiele für solche chromophore Systeme sind Azofarbstoffe, vor allem Monoazo- oder Hydrazonfarbstoffe, Diphenylmethan-, Triphenylmethan-, Methin- oder Azomethinfarbstoffe, Cumarin-, Ketonimin-, Cyanin-, Azin-, Xanthen-, Oxazin- oder Thiazinfarbstoffe. Schliesslich können auch Farbsalze der Phthalocyanin- oder Anthrachinonreihe mit externer Oniumgruppe, beispielsweise einer Alkylammonium- oder Cycloammoniumgruppe sowie Benzo-1,2-pyranfarbsalze, die Cycloammoniumgruppen enthalten, verwendet werden.

Die zu verwendenden Dispersionsfarbstoffe, die in Wasser nur sehr wenig löslich sind und in der Farbflotte zum grössten Teil in Form einer feinen Dispersion vorliegen, können den verschiedensten Farbstoffklassen angehören, beispielsweise den Acridon-, Azo-, Anthrachinon-, Cumarin-, Methin-, Perinon-, Naphthochinonimin-, Chinophthalon-, Styryl- oder Nitrofarbstoffen.

Es können auch Mischungen von kationischen oder Dispersionsfarbstoffen erfindungsgemäss eingesetzt werden.

Die Menge der der Flotte zuzusetzenden Farbstoffe richtet sich nach der gewünschten Farbstärke; im allgemeinen haben sich Mengen von 0,01 bis 10, vorzugsweise 0,02 bis 5 Gewichtsprozent, bezogen auf das eingesetzte Textilmaterial, bewährt.

Die erfindungsgemäss zu verwendenden Hilfsmittel können auch in Mischung mit bekannten Diffusionsbeschleunigern auf Basis von z.B. Di- oder Trichlorbenzol, Methyl- oder Ethylbenzol, o-Phenylphenol, Benzylphenol, Diphenylether, Chlordiphenyl, Methyldiphenyl, Cyclohexanon, Acetophenon, Alkylphenoxyethanol, Mono-, Di- oder Trichlorphenoxyethanol oder -propanol, Pentachlorphenoxyethanol, Alkylphenylbenzoate, oder insbesondere auf Basis von Diphenyl, Methyldiphenylether, Dibenzylether, Methylbenzoat, Butylbenzoat oder Phenylbenzoat eingesetzt werden.

Die Diffusionsbeschleuniger werden vorzugsweise in einer Menge von 0,5 g bis 5 g/l Flotte oder 5 bis 30 Gewichtsprozent, bezogen auf die Hilfsmitteldispersion, verwendet.

Die Farbbäder können je nach dem zu behandelnden Textilmaterial neben den Farbstoffen und dem erfindungsgemässen Hilfsmittelgemisch, Oligomereninhibitoren, Antischaummittel, Faltenfreimittel, Retarder und vorzugsweise Dispergiermittel enthalten.

Die Dispergiermittel dienen vor allem zur Erzielung einer guten Feinverteilung der Dispersionsfarbstoffe. Es kommen die beim Färben mit Dispersionsfarbstoffen allgemein gebräuchlichen Dispergatoren in Frage.

Als Dispergiermittel kommen vorzugsweise sulfatierte oder phosphatierte Anlagerungsprodukte von 15 bis 100 Mol Ethylenoxid oder vorzugsweise Propylenoxid an mehrwertige, 2 bis 6 Kohlenstoffatome aufweisende aliphatische Alkohole wie z.B. Ethylenglykol, Glycerin oder Pentaerythrit oder an mindestens zwei Aminogruppen oder eine Aminogruppe und eine Hydroxylgruppe aufweisende Amine mit 2 bis 9 Kohlenstoffatomen sowie Alkylsulfonate mit 10 bis 20 Kohlenstoffatomen in der Alkylkette, Alkylbenzolsulfonate mit geradkettiger oder verzweigter Alkylkette mit 8 bis 20 Kohlenstoffatomen in der Alkylkette, wie z.B. Nonyl- oder Dodecylbenzolsulfonat, 1,3,5,7-Tetramethyloctylbenzolsulfonat oder Octadecylbenzolsulfonat, sowie Alkylnaphthalinsulfonate oder Sulfobernsteinsäureester, wie Natriumdioctylsulfosuccinat, in Betracht.

Besonders günstig haben sich als anionische Dispergiermittel Ligninsulfonate, Polyphosphate und vorzugsweise Formaldehyd-Kondensationsprodukte aus aromatischen Sulfonsäuren, Formaldehyd und gegebenenfalls mono- oder bifunktionellen Phenolen wie z.B. aus Kresol, ß-Naphtholsulfonsäure und Formaldehyd, aus Benzolsulfonsäure, Formaldehyd und Naphthalinsulfonsäure, aus Naphthalinsulfonsäure und Formaldehyd oder aus Naphthalinsulfonsäure, Dihydroxydiphenylsulfon und Formaldehyd erwiesen. Bevorzugt ist das Dinatriumsalz des Di- oder Tri-(6-sulfonaphthyl-2-)methans.

Es können auch Gemische von anionischen Dispergiermitteln zum Einsatz kommen. Normalerweise liegen die anionischen Dispergiermittel in Form ihrer Alkalimetallsalze, Ammoniumsalze oder Aminsalze vor. Diese Dispergiermittel werden vorzugsweise in einer Menge von 0,5 bis 8 g/l Flotte verwendet.

Die Färbebäder können auch übliche Zusätze, zweckmässig Elektrolyte wie Salze, z.B. Natriumsulfat, Ammoniumsulfat, Natrium- oder Ammoniumphosphate oder -polyphosphate, Metallchloride oder -nitrate wie Calciumchlorid, Magnesiumchlorid bzw. Calciumnitrate, Ammoniumacetat oder Natriumacetat und/oder Säuren, z.B. Mineralsäuren, wie Schwefelsäure oder Phosphorsäure, oder organische Säuren, zweckmässig niedere aliphatische Carbonsäuren, wie Ameisen-, Essig- oder Oxalsäure enthalten. Die Säuren dienen vor allem der Einstellung des pH-Wertes der erfindungsgemäss verwendeten Flotten, der in der Regel 4 bis 6,5, vorzugsweise 4,5 bis 6, beträgt.

Die Färbungen erfolgen mit Vorteil aus wässriger Flotte nach dem Ausziehverfahren. Das Flottenverhältnis kann dementsprechend innerhalb eines weiten Bereiches gewählt werden, z.B. 1:3 bis 1:100, vorzugsweise 1:7 bis 1:50. Die Temperatur, bei der gefärbt bzw. aufgehellt wird, beträgt mindestens 70 °C und in der Regel ist sie nicht höher als 140 °C. Vorzugsweise liegt sie im Bereich von 80 bis 135 °C.

Lineare Polyesterfasern und Cellulosetriacetatfasern färbt man vorzugsweise nach dem sogenannten Hochtemperaturverfahren in geschlossenen und zweckmässigerweise auch druckbeständigen Apparaturen bei Temperaturen von über 100 °C, bevorzugt zwischen 110 und 135 °C, und gegebenenfalls unter Druck. Als geschlossene Gefässe eignen sich beispielsweise Zirkulationsapparaturen wie Kreuzspul- oder Baumfärbeapparate, Haspelkufen, Düsen- oder Trommelfärbemaschinen, Muff-Färbeapparate, Paddeln oder Jigger.

Cellulose-2 1/2-acetatfasern färbt man vorzugsweise bei Temperaturen von 80-85 °C. Die Färbung der aromatischen Polyamidfasern oder sauer modifizierten Polyesterfasern wird vorzugsweise bei einer Temperatur von 80 bis 130 °C vorgenommen.

Das Färbeverfahren kann so durchgeführt werden, dass man das Färbegut entweder zuerst mit dem Hilfsmittelgemisch kurz behandelt und anschliessend färbt oder vorzugsweise gleichzeitig mit dem Hilfsmittelgemisch und dem Farbstoff behandelt.

Vorzugsweise lässt man das Färbegut während 5 Minuten bei 60-80 °C im Bad, das den Farbstoff, das Hilfsmittelgmisch und gegebenenfalls weitere Zusätze enthält und auf einen pH-Wert von 4,5 bis 5,5 eingestellt ist, vorlaufen, steigert die Temperatur innerhalb von 15 bis 35 Minuten auf 110 bis 135 °C, vorzugsweise 125-130 °C und belässt die Färbeflotte 15 bis 90 Minuten, vorzugsweise 30 bis 60 Minuten, bei dieser Temperatur.

Die Fertigstellung der Färbungen erfolgt durch Abkühlen der Färbeflotte auf 60 bis 80 °C, Spülen der Färbungen mit Wasser und gegebenenfalls durch Reinigung auf übliche Weise im alkalischen Medium unter reduktiven Bedingungen. Die Färbungen werden dann wiederum gespült und getrocknet. Man erhält auf synthetischem Fasermaterial, insbesondere auf linearen Polyesterfasern, gleichmässige und farbkräftige Ausfärbungen, die sich zudem durch gute Lichtechtheit und Reibechtheiten auszeichnen. Während des Färbens bleibt die Färbeflotte stabil und entstehen keine Ablagerungen im Inneren der Färbeapparaturen.

In den folgenden Beispielen sind die Teile Gewichtsteile und die Prozente Gewichtsprozente.

Beispiel 1

In einer Sandmühle werden
35 Teile 2-(2'-Hydroxy-3'-tert.butyl-5'-methylphenyl-)5-chlorobenzotriazol
11,2 Teile des mit Triethanolamin neutralisierten Umsetzungsproduktes von Phosphorpentoxid mit einem Oxalkylierungsproduktes mit 18 Ethylenoxideinheiten des Anlagerungsproduktes von 2,5 bis 3 Mol Styrol an 1 Mol Phenol und
53,8 Teile Wasser gemischt.

Hierauf wird die Mischung mit Quarzsand solange gemahlen, bis die Partikelgrösse < 5 µm ist.

71,4 Teile der erhaltenen Dispersion werden unter Rühren mit 15,0 Teilen einer 2 %igen wässrigen Lösung von mit Triethanolamin neutralisierter Polyacrylsäure (Molekulargewicht 1,25 Millionen), 1 Teil eines entlüftungs- und lösungsmittelhaltigen Antischaummittels auf Basis von 2-Ethylhexanol und Silikonöl und 12,6 Teilen Wasser homogenisiert. Man erhält eine lagerstabile Dispersion.

Beispiel 2

In einer Sandmühle werden
35 Teile 2-(2'-Hydroxy-3'-tert.butyl-5'-methylphenyl-)5-chlorobenzotriazol
7 Teile Triethanolaminsalz eines Gemisches von Mono- und Diesterphosphat eines Oxalkylierungsproduktes mit 18 Ethylenoxideinheiten des Anlagerungsproduktes von 2,5 bis 3 Mol Styrol an 1 Mol Phenol,
7 Teile eines Oxalkylierungsproduktes von 18 Mol Ethylenoxid mit 1 Mol eines Anlagerungsproduktes von 2,5 bis 3 Mol Styrol an 1 Mol Phenol und
51 Teile Wasser gemischt.

Alsdann wird die Mischung solange gemahlen, bis die Partikelgrösse < 5 µm ist. 71,4 Teile der erhaltenen Dispersion werden unter Rühren mit 25,0 Teilen einer 2 %igen wässrigen Lösung eines Biopolymeren auf Polysaccharidbasis, 1 Teil eines entlüftungs- und lösungsmittelhaltigen Antischaummittels auf Basis von 2-Ethylhexanol und Silikonöl und 2,6 Teilen Wasser homogenisiert. Man erhält eine lagerstabile Dispersion.

Beispiel 3

In einer Sandmühle werden
35 Teile 2-(2'-Hydroxy-3'-tert.butyl-5'-methylphenyl-)5-chlorobenzotriazol
11,2 Teile des Natriumsalzes des sauren Schwefelsäureesters des Oxalkylierungsproduktes von 18 Mol Ethylenoxid an 1 Mol des Anlagerungsproduktes von 2,5 bis 3 Mol Styrol an 1 Mol Phenol,
0,3 Teile 2-Chloracetamid und
53,5 Teile Wasser
gemischt. Die Mischung wird solange gemahlen, bis die Partikelgrösse < 5 µm ist.

71,4 Teile der erhaltenen Dispersion werden unter Rühren mit 15 Teilen einer 2 %igen wässrigen Lösung von mit Triethanolamin neutralisierter Polyacrylsäure (Molekulargewicht 1,25 Millionen), 1 Teil eines entlüftungs- und lösungsmittelhaltigen Antischaummittels auf Basis von 2-Ethylhexanol und Silikonöl und 12,6 Teilen Wasser homogenisiert. Man erhält eine lagerstabile Dispersion.

Beispiel 4

In einer Sandmühle werden
35 Teile 2-(2'-Hydroxy-3'-tert.butyl-5'-methylphenyl-)5-chlorobenzotriazol
11,2 Teile des mit Natriumhydroxidlösung neutralisierten Umsetzungsprodukts von Phosphorpentoxid mit p-Nonylphenylpolyethylenglykolether mit 10 Ethylenoxideinheiten und
0,3 Teile 2-Chloracetamid und
53,5 Teile Wasser
gemischt. Die Mischung wird solange gemahlen, bis die Partikelgrösse < 5 µm ist.

71,4 Teile der erhaltenen Dispersion werden unter Rühren mit 25 Teilen einer 2 %igen wässrigen Lösung eines Biopolymeren auf Polysaccharidbasis, 1 Teil eines entlüftungs- und lösungsmittelhaltigen Antischaummittels auf Basis von 2-Ethylhexanol und Silikonöl und 2,6 Teilen Wasser homogenisiert. Man erhält eine lagerstabile Dispersion.

Beispiel 5

In einer Sandmühle werden
40 Teile 2-(2'-Hydroxy-3'-tert.butyl-5'-methylphenyl)-5-chloro-benzotriazol,
13,4 Teile des mit Triethanolamin neutralisierten Umsetzungsprodukts von Phosphorpentoxid mit dem Oxalkylierungsprodukt mit 18 Ethylenoxideinheiten des Anlagerungsprodukts von 2,5-3,0 Mol Styrol an 1 Mol Phenol
1,4 Teile N,N'-Ethylen-bis-stearamid und
45,2 Teile Wasser gemischt.

Alsdann wird die Mischung mit Quarzsand solange gemahlen, bis die Partikelgrösse < 5 µm ist. Die Dispersion wird vom Mahlsand abgetrennt.
75 Teile der erhaltenen Dispersion werden unter Rühren mit
12,5 Teilen einer 2 %igen wässrigen Lösung eines Biopolymeren auf Polysaccharidbasis und
12,5 Teilen Wasser vermischt und homogenisiert.

Man erhält eine lagerstabile leicht viskose Dispersion.

Beispiel 6

In einer Sandmühle werden
40 Teile 2-(2'-Hydroxy-3'-tert.butyl-5'-methylphenyl)-5-chloro-benztriazol,
13,4 Teile einer Mischung aus
50 Teilen Tri-(α-methylbenzyl)-phenylpolyoxyethylen (18) und
30 Teilen einer Mischung aus Mono- und Diphosphorsäureester von Tri-(α-methylbenzyl)-phenylpolyoxyethylen (18), die mit
20 Teilen Triethanolamin neutralisiert worden ist,
1,4 Teile N,N'-Ethylen-bis-stearamid und
45,2 Teile Wasser gemischt.

Alsdann wird die Mischung mit Quarzsand solange gemahlen, bis die Partikelgrösse < 5 µm ist. Die Dispersion wird vom Mahlsand abgetrennt.
75 Teile der erhaltenen Dispersion werden unter Rühren mit
12,5 Teilen einer 2 %igen wässrigen Lösung eines Biopolymeren auf Polysaccharidbasis und
12,5 Teilen Wasser vermischt und homogenisiert.

Man erhält eine lagerstabile leicht viskose Dispersion.

Beispiel 7

In einer Sandmühle werden
40 Teile 2-(2'-Hydroxy-3'-tert.butyl-5'-methylphenyl)-5-chloro-benztriazol,
13,4 Teile einer Mischung aus
60 Teilen Tri-(α-methylbenzyl)-phenylpolyoxyethylen (18) und
35 Teilen einer Mischung aus Mono- und Diphosphorsäureester von Tri-(α-methylbenzyl)-phenylpolyoxyethylen (18), die mit
5 Teilen Kaliumhydroxid neutralisiert worden ist,
1,4 Teile N,N'-Ethylen-bis-stearamid und
45,2 Teile Wasser gemischt.

Alsdann wird die Mischung mit Quarzsand solange gemahlen, bis die Partikelgrösse < 5 µm ist. Die Dispersion wird vom Mahlsand abgetrennt.
75 Teile der erhaltenen Dispersion werden unter Rühren mit
12,5 Teilen einer 2 %igen wässrigen Lösung eines Biopolymeren auf Polysaccharidbasis und
12,5 Teilen Wasser vermischt und homogenisiert.

Man erhält eine lagerstabile leicht viskose Dispersion.

Beispiel 8

In einer Sandmühle werden
40 Teile 2-(2'-Hydroxy-3'-tert.butyl-5'-methylphenyl)-5-chloro-benztriazol,
11 Teile einer Mischung aus
15 Teilen p-Nonyl-phenylpolyoxyethylen (10),

80 Teilen einer Mischung aus Mono- und Diphosphorsäureester von (p-Nonyl)-phenyl-polyoxyethylen (10), die mit
5 Teilen Natriumhydroxid neutralisiert worden ist,
4 Teile N,N'-Ethylen-bis-stearamid und
45 Teile Wasser gemischt.

Alsdann wird die Mischung mit Quarzsand solange gemahlen, bis die Partikelgrösse < 5 µm ist. Die Dispersion wird vom Mahlsand abgetrennt.
75 Teile der erhaltenen Dispersion werden unter Rühren mit
12,5 Teilen einer 2 %igen wässrigen Lösung eines Biopolymeren auf Polysaccharidbasis und
12,5 Teilen Wasser vermischt und homogenisiert.

Man erhält eine lagerstabile leicht viskose Dispersion.

Beispiel 9

In einer Sandmühle werden
40 Teile 2-(2'-Hydroxy-3'-tert.butyl-5'-methylphenyl)-5-chlorobenztriazol
8 Teile des Natriumsalzes des mit Maleinsäure veresterten Oxalkylierungsproduktes mit 18 Ethylenoxideinheiten eines Anlagerungsproduktes von 3 Mol Styrol an 1 Mol Phenol,
1 Teil N,N'-Ethylen-bis-stearamid und
51 Teile Wasser gemischt.

Alsdann wird die Mischung mit Quarzsand solange gemahlen, bis die Partikelgrösse <5 µm ist. die Dispersion wird vom Mahlsand abgetrennt.
75 Teile der erhaltenen Dispersion werden unter Rühren mit
12,5 Teile einer 2 %igen wässrigen Lösung eines Biopolymeren auf Polysaccharidbasis,
0,3 Teilen Chloracetamid und
12,2 Teilen Wasser vermischt und homogenisiert.

Man erhält eine lagerstabile Dispersion.

Beispiel 10

In einer Sandmühle werden
35 Teile 2-(2'-Hydroxy-3'-tert.butyl-5'-methylphenyl)-5-chlorobenzotriazol
11,7 Teile des mit Natriumhydroxid neutralisierten Umsetzungsproduktes von Phosphorpentoxid mit einem Oxalkylierungsproduktes mit 13 Ethylenoxideinheiten des Anlagerungsproduktes von 2,5 bis 3 Mol Styrol an 1 Mol Phenol und
53,3 Teile Wasser gemischt.

Hierauf wird die Mischung mit Quarzsand solange gemahlen, bis die Partikelgrösse < 5 µm ist.

71,4 Teile der erhaltenen Dispersion werden unter Rühren mit 25,0 Teilen einer 2%igen wässrigen Lösung eines Biopolymeren auf Polysaccharidbasis, 1 Teil eines entlüftungs- und lösungsmittelhaltigen Antischaummittels auf Basis von 2-Ethylhexanol und Silikonöl und 2,6 Teilen Wasser homogenisiert. Man erhält eine lagerstabile Dispersion.

Beispiel 11

In einer Sandmühle werden
40 Teile 2-(2'-Hydroxy-3'-tert.butyl-5'-methylphenyl)-5-chloro-benztriazol,
16 Teile einer Mischung aus
3 Teilen des Polyadduktes von 10 Mol Ethylenoxid an 1 Mol Dinonylphenol und
13 Teilen des Natriumsalzes einer Mischung von Mono- und Diesterphosphat des Anlagerungsproduktes von 10 Mol Ethylenoxid an 1 Mol Dinonylphenol
4 Teile N,N'-Ethylen-bis-(stearamid) und
40 Teile Wasser gemischt.

Alsdann wird die Mischung mit Quarzsand solange gemahlen, bis die Partikelgrösse < 5 µm ist. Die Dispersion wird vom Mahlsand abgetrennt.
75 Teile der erhaltenen Dispersion werden unter Rühren mit
12,5 Teilen einer 2%igen wässrigen Lösung eines Biopolymeren auf Polysaccharidbasis und
12,5 Teilen Wasser vermischt und homogenisiert.

Man erhält eine lagerstabile leicht viskose Dispersion.

Beispiel 12

100 g eines Polyestergewirkes (Polyethylenglykolterephthalat) werden in einem HT-Zirkulationsapparat bei 60 °C in 3 Liter Wasser eingebracht, welches
9 g Ammoniumsulfat
18 g Dinatriumsalz von Di-(6-sulfonaphthyl-2-)methan
5 g eines fein dispergierten Farbstoffes der Formel

(101) 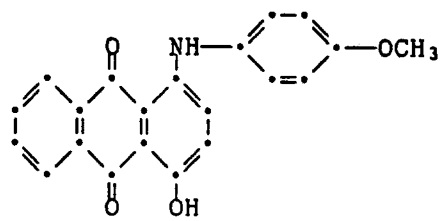

3 g der gemäss Beispiel 5 hergestellten Hilfsmittelformulierung
enthält und mit 85 %iger Ameisensäure auf pH 5 eingestellt ist. Man erhitzt das Färbebad, bei ständig zirkulierender Flotte, innerhalb von 30 Minuten auf 130 °C und färbt 1 Stunde bei dieser Temperatur. Alsdann wird das Färbebad abgekühlt und das Substrat gespült und wie üblich zur Entfernung von nichtfixiertem Farbstoff reduktiv gereinigt. Anschliessend wird das Substrat neutralisiert, nochmals gespült und getrocknet. Bedingt durch die stabile mitverwendete Hilfsmittelformulierung wird während des Färbeprozesses weder ein Anstieg des Differenzdruckes festgestellt noch zeigen sich Ablagerungen im Inneren des Wickelkörpers. Man erhält somit eine gleichmässige lichtechte marineblaue Färbung.

Gleichmässige lichtechte marineblaue Färbungen werden auch erhalten, wenn anstelle der Hilfsmittelformulierung gemäss Beispiel 5 die gemäss dem Beispiel 1, 2, 3, 4, 6, 7, 8, 9, 10 oder 11 hergestellte Hilfsmittelformulierung eingesetzt wird.

Beispiel 13

In einen Hochtemperatur-Färbeapparat enthaltend 2 Liter einer wässrigen Flotte, die
2 g eines amphoteren sulfatierten Fettaminpolyethylenglykolethers,
12 g kalz. Natriumsulfat,
1,5 g eines Farbsalzes der Formel

(102) 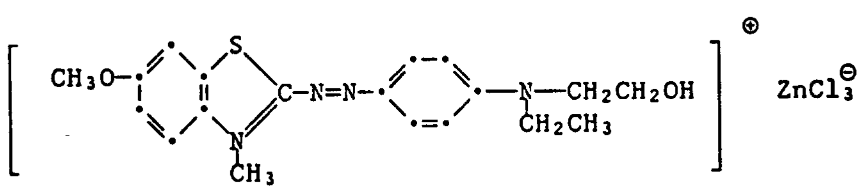

und 3 g der gemäss Beispiel 2 hergestellten wässrigen Hilfsmitteldispersion
enthält und mit Essigsäure auf pH 4,5 eingestellt ist, werden 100 g eines Dacron 64-Gewebes (säuremodifizierte Polyesterfasern) eingebracht. Man erhitzt das Färbebad innerhalb von 30 Minuten auf 120 °C und färbt 1 Stunde bei dieser Temperatur. Alsdann wird das Färbebad auf 70 °C abgekühlt, das Substrat neutralisiert, gespült und wie üblich getrocknet.

Die Färbeflotte zeigt während des Färbens keine Ausfällungen und Ablagerungen. Man erhält somit eine gleichmässige und lichtechte rote Färbung.

Gleichmässige lichtechte rote Färbungen werden auch erhalten, wenn anstelle der Hilfsmittelformulierung gemäss Beispiel 2 die gemäss dem Beispiel 1, 3, 4, 5, 6, 7, 8, 9, 10 oder 11 hergestellte Hilfsmittelformulierung eingesetzt wird.

## Patentansprüche

1. Wässrige Dispersion einer 2-(2'-Hydroxyphenyl-)benzotriazolverbindung, dadurch gekennzeichnet, dass sie
   (a) 15 bis 50 Gewichtsprozent einer Benzotriazolverbindung der Formel

   (1) 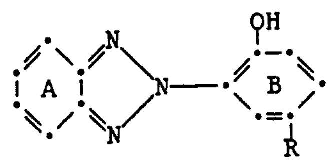

   worin R Halogen, $C_1$-$C_{12}$-Alkyl, Niederalkoxy, Niederalkoxycarbonyl, Cycloalkyl, Aryl, $C_1$-$C_{12}$-Alkylaryl oder Aralkyl bedeutet, und die Ringe A und B, unabhängig voneinander, unsubstituiert oder durch Halogen, Hydroxy, Niederalkyl, Niederalkoxy oder Niederalkoxycarbonyl substituiert sind, und
   (b) 2 bis 20 Gewichtsprozent eines sauren Esters oder dessen Salzes eines Alkylenoxidadduktes der Formel

   (2) 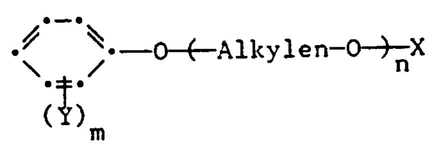

   worin X den Säurerest einer anorganischen, Sauerstoff enthaltenden Säure, oder den Rest einer organischen Säure und Y $C_1$-$C_{12}$-Alkyl, Aryl oder Aralkyl bedeuten, "Alkylen" für den Ethylenrest oder Propylenrest steht, und m 1 bis 4 und n 4 bis 50 sind, enthält.

2. Dispersion gemäss Anspruch 1, dadurch gekennzeichnet, dass in Formel (1) der Ring A in 5-Stellung durch Halogen, Niederalkyl oder Niederalkoxy substituiert ist.

3. Dispersion gemäss einem der Ansprüche 1 und 2, dadurch gekennzeichnet, dass in Formel (1) der Ring B in Nachbarstellung zur Hydroxylgruppe durch Halogen oder Niederalkyl substituiert ist.

4. Dispersion gemäss einem der Ansprüche 1 bis 3, dadurch gekennzeichnet, dass in Formel (1) R Niederalkyl darstellt.

5. Dispersion gemäss einem der Ansprüche 1 bis 4, dadurch gekennzeichnet, dass in Formel (2) Y $C_4$-$C_{12}$-Alkyl, Benzyl oder $\alpha$-Methylbenzyl bedeutet.

6. Dispersion gemäss einem der Ansprüche 1 bis 5, dadurch gekennzeichnet, dass sich der Säurerest X in Formel (2) von Schwefelsäure oder Orthophosphorsäure ableitet.

7. Dispersion gemäss Anspruch 1, dadurch gekennzeichnet, dass die Komponente (a) der Formel

   (3) 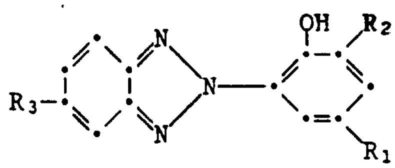

   entspricht, worin $R_1$ Halogen, Niederalkyl oder Niederalkoxy und $R_2$ und $R_3$, unabhängig voneinander, je Wasserstoff, Halogen, Niederalkyl oder Niederalkoxy bedeuten.

8. Dispersion gemäss Anspruch 7, dadurch gekennzeichnet, dass in Formel (3) $R_1$ Niederalkyl, $R_2$ Wasserstoff oder Niederalkyl und $R_3$ Wasserstoff, Chlor oder Methyl bedeuten.

**9.** Dispersion gemäss einem der Ansprüche 1 bis 8, dadurch gekennzeichnet, dass die Komponente (b) der Formel

(4) 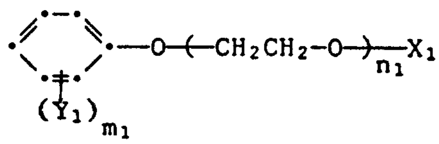

entspricht, worin $Y_1$ $C_4$-$C_{12}$-Alkyl, Phenyl, Tolyl, Phenyl-$C_1$-$C_3$-alkyl oder Tolyl-$C_1$-$C_3$-alkyl bedeutet, $X_1$ ein Säurerest ist, der sich von Schwefelsäure oder Orthophosphorsäure ableitet, und $m_1$ 1 bis 3 und $n_1$ 4 bis 40 sind.

**10.** Dispersion gemäss einem der Ansprüche 1 bis 9, dadurch gekennzeichnet, dass die Komponente (b) ein saurer Phosphorsäureester oder dessen Salz des Oxalkylierungsproduktes von 8 bis 30 Mol Ethylenoxid an 1 Mol 4-Nonylphenol oder Dinonylphenol oder an 1 Mol einer Verbindung, die durch Anlagerung von 1 bis 3 Mol Styrol, α-Methylstyrol oder Vinyltoluol an 1 Mol Phenol, Kresol oder Xylenol hergestellt worden ist, ist.

**11.** Dispersion gemäss einem der Ansprüche 1 bis 10, dadurch gekennzeichnet, dass die Komponente (b) ein saurer Phosphorsäureester oder dessen Salz des Oxalkylierungsproduktes der Formel

(5) 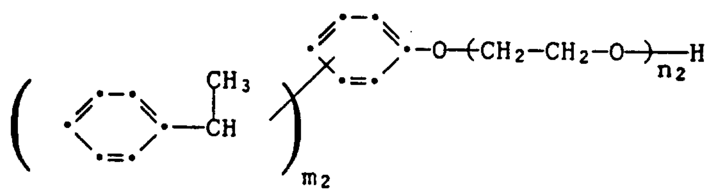

ist, worin $m_2$ 1 bis 3 und $n_2$ 12 bis 30 sind.

**12.** Dispersion gemäss einem der Ansprüche 1 bis 11, dadurch gekennzeichnet, dass die Komponente (b) das Triethanolamin-, Kalium- oder Natriumsalz eines sauren Phosphorsäureesters des Oxalkylierungsproduktes von 12 bis 18 Mol Ethylenoxid an 1 Mol einer Verbindung, die durch Anlagerung von 1 bis 3 Mol Styrol an 1 Hol Phenol hergestellt worden ist.

**13.** Dispersion gemäss einem der Ansprüche 1 bis 12, dadurch gekennzeichnet, dass sie zusätzlich als Komponente (c) ein Stabilisierungs- oder Verdickungsmittel enthält.

**14.** Dispersion gemäss Anspruch 13, dadurch gekennzeichnet, dass die Komponente (c) eine 0,5 bis 10 %ige wässrige Lösung oder Dispersion einer polymerisierten ethylenisch-ungesättigten Mono- oder Dicarbonsäure von 3 bis 5 Kohlenstoffatomen, insbesondere Polyacrylsäure ist.

**15.** Dispersion gemäss Anspruch 13, dadurch gekennzeichnet, dass die Komponente (c) ein Polysaccharid ist.

**16.** Dispersion gemäss einem der Ansprüche 1 bis 15, dadurch gekennzeichnet, dass sie zusätzlich ein nichtionisches Tensid enthält.

**17.** Dispersion gemäss Anspruch 16, dadurch gekennzeichnet, dass das nichtionische Tensid ein Oxalkylierungsprodukt der Formel

(5) 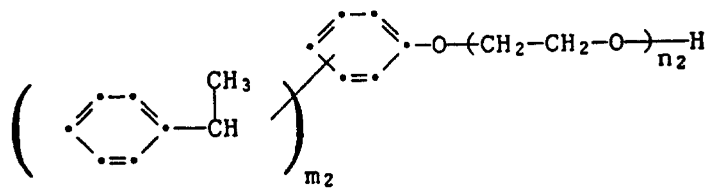

ist, worin $m_2$ 1 bis 3 und $n_2$ 12 bis 30 sind.

**18.** Dispersion gemäss Anspruch 16, dadurch gekennzeichnet, dass das nichtionogene Tensid das Oxalkylierungsprodukt von 12 bis 20 Mol Ethylenoxid an 1 Mol einer Verbindung, die durch Anlagerung von 1 bis 3 Mol Styrol an 1 Mol Phenol hergestellt worden ist.

**19.** Dispersion gemäss einem der Ansprüche 1 bis 18, dadurch gekennzeichnet, dass sie zusätzlich eine weitere, von der Komponente (b) verschiedene, anionische Verbindung enthält.

**20.** Dispersion gemäss einem der Ansprüche 1 bis 19, dadurch gekennzeichnet, dass sie zusätzlich ein Antischaummittel enthält.

**21.** Dispersion gemäss Anspruch 20, dadurch gekennzeichnet, dass das Antischaummittel ein Alkylendiamid der Formel

(6) $V_1—CO—NH—Q—NH—CO—V_2$

ist, in der $V_1$ und $V_2$, unabhängig voneinander, je einen aliphatischen Rest mit 9 bis 23 Kohlenstoffatomen und Q einen Alkylenrest mit 1 bis 8 Kohlenstoffatomen bedeuten.

**22.** Dispersion gemäss einem der Ansprüche 1 bis 21, dadurch gekennzeichnet, dass sie zusätzlich ein Konservierungsmittel und/oder ein Gefrierschutzmittel enthält.

**23.** Dispersion gemäss Anspruch 1, dadurch gekennzeichnet, dass sie, bezogen auf die gesamte Dispersion,
15-50 Gewichtsprozent der Komponente (a),
2-20 Gewichtsprozent der Komponente (b),
0- 5, vorzugsweise 0,1 bis 3 Gewichtsprozent der Komponente (c),
0-20 Gewichtsprozent eines nichtionogenen Tensides,
0- 8 Gewichtsprozent einer weiteren, von der Komponente (b) verschiedenen, anionischen Komponente,
0- 3 Gewichtsprozent eines Antischaummittels,
0- 1 Gewichtsprozent eines Konservierungsmittels und
0-20 Gewichtsprozent eines Gefrierschutzmittels
enthält.

**24.** Verwendung der wässrigen Dispersion gemäss einem der Ansprüche 1 bis 23 beim Färben von synthetischen Fasermaterialien, insbesondere Polyesterfasern oder säuremodifizierten Polyesterfasern.

**25.** Verfahren zum Färben von Polyesterfasern oder säuremodifizierte Polyesterfasern, enthaltendem Textilmaterial mit Dispersionsfarbstoffen bzw. kationischen Farbstoffen, dadurch gekennzeichnet, dass man dieses Material in Gegenwart einer wässrigen Dispersion einer 2-(2'-Hydroxyphenyl-)benzotriazolverbindung gemäss einem der Ansprüche 1 bis 23 färbt.

## Claims

**1.** An aqueous dispersion of a 2-(2'-hydroxyphenyl)benzotriazole compound, containing

(a) 15 to 50 per cent by weight of a benzotriazole compound of the formula

(1) 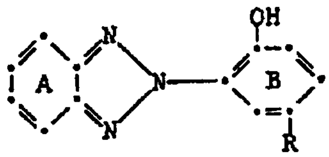

in which R is halogen, $C_1C_{12}$alkyl, lower alkoxy, lower alkoxycarbonyl, cycloalkyl, aryl, $C_1C_{12}$alkylaryl or aralkyl, and the rings A and B are independently of one another unsubstituted or substituted by halogen, hydroxyl, Lower alkyl, Lower alkoxy or lower alkoxycarbonyl, and

(b) 2 to 20 per cent by weight of an acidic ester, or a salt thereof, of an alkylene oxide adduct of the formula

(2) 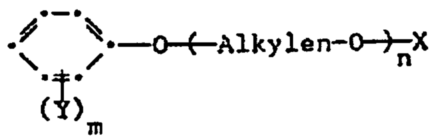

in which X is the acid radical of an inorganic oxygen-containing acid, or the radical of an organic acid and Y is $C_1C_{12}$alkyl, aryl or aralkyl, "Alkylen" is the ethylene radical or propylene radical, m is from 1 to 4 and n is from 4 to 50.

**2.** A dispersion according to claim 1, wherein in formula (1) the ring A is substituted in the 5-position by halogen, lower alkyl or lower alkoxy.

**3.** A dispersion according to one of claims 1 and 2, wherein in formula (1) the ring B is substituted by halogen or lower alkyl in the position adjacent to the hydroxyl group.

**4.** A dispersion according to any one of claims 1 to 3, wherein in formula (1) R is lower alkyl.

**5.** A dispersion according to any one of claims 1 to 4, wherein in formula (2) Y is $C_4$-$C_{12}$alkyl, benzyl or $\alpha$-methylbenzyl.

**6.** A dispersion according to any one of claims 1 to 5, wherein the acid radical X in formula (2) is derived from sulfuric acid or orthophosphoric acid.

**7.** A dispersion according to claim 1, wherein component (a) conforms to the formula

(3) 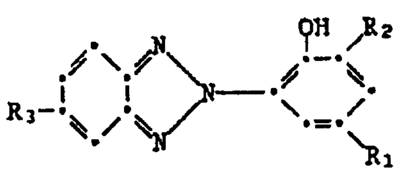

in which $R_1$ is halogen, lower alkyl or lower alkoxy, and $R_2$ and $R_3$ are each independently of the other hydrogen, halogen, lower alkyl or lower alkoxy.

**8.** A dispersion according to claim 7, wherein in formula (3) $R_1$ is lower alkyl, $R_2$ is hydrogen or lower alkyl and $R_3$ is hydrogen, chlorine or methyl.

**9.** A dispersion according to any one of claims 1 to 8, wherein component (b) conforms to the formula

(4) 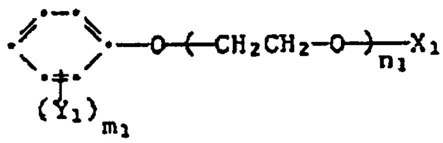

in which $Y_1$ is $C_4$-$C_{12}$alkyl, phenyl, tolyl, phenyl-$C_1$-$C_3$alkyl or tolyl-$C_1$-$C_3$ alkyl, $X_1$ is an acid radical derived from sulfuric acid or orthophosphoric acid, $m_1$ is from 1 to 3 and $n_1$ is from 4 to 40.

**10.** A dispersion according to any one of claims 1 to 9, wherein component (b) is an acidic phosphoric ester, or a salt thereof, of the alkoxylation product of 8 to 30 mol of ethylene oxide with 1 mol of 4-nonylphenol or dinonylphenol or with 1 mol of a compound prepared by the addition of 1 to 3 mol of styrene, $\alpha$-methylstyrene or vinyltoluene with 1 mol of phenol, cresol or xylenol.

**11.** A dispersion according to any one of claims 1 to 10, wherein component (b) is an acidic phosphoric ester, or a salt thereof, of the alkoxylation product of the formula

(5) 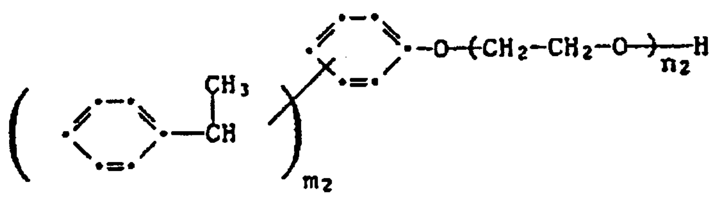

in which $m_2$ is from 1 to 3 and $n_2$ is from 12 to 30.

**12.** A dispersion according to any one of claims 1 to 11, wherein component (b) is the triethanolamine, potassium or sodium salt of an acidic phosphoric ester of the alkoxylation product of 12 to 18 mol of ethylene oxide with 1 mol of a compound prepared by the addition of 1 to 3 mol of styrene with 1 mol of phenol.

**13.** A dispersion according to any one of claims 1 to 12, which additionally contains as component (c) a stabilizing or thickening agent.

**14.** A dispersion according to claim 13, wherein component (c) is a 0.5 to 10 % aqueous solution or dispersion of a polymerized ethylenically unsaturated mono- or dicarboxylic acid of 3 to 5 carbon atoms, in particular polyacrylic acid.

**15.** A dispersion according to claim 13, wherein component (c) is a polysaccharide.

**16.** A dispersion according to any one of claims 1 to 15, which additionally contains a nonionic surfactant.

**17.** A dispersion according to claim 16, wherein the nonionic surfactant is an alkoxylation product of the formula

(5) 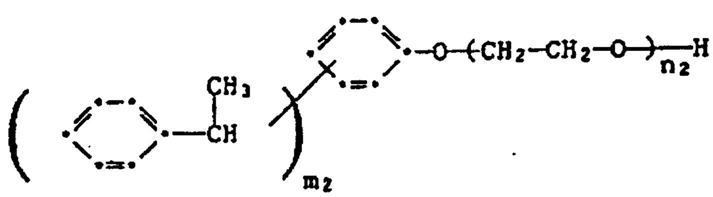

in which $m_2$ is from 1 to 3 and $n_2$ is from 12 to 30.

**18.** A dispersion according to claim 16, wherein the nonionic surfactant is the alkoxylation product of 12 to 20 mol of ethylene oxide with 1 mol of a compound prepared by the addition of 1 to 3 mol of styrene with 1 mol of phenol.

**19.** A dispersion according to any one of claims 1 to 18, which additionally contains a further anionic compound other than component (b).

**20.** A dispersion according to any one of claims 1 to 19, which additionally contains an antifoam.

**21.** A dispersion according to claim 20, wherein the antifoam is an alkylenediamide of the formula

$V_1$-CO-NH-Q-NH-CO-$V_2$ (6)

in which $V_1$ and $V_2$ are each independently of the other an aliphatic radical of 9 to 23 carbon atoms and Q is an alkylene radical of 1 to 8 carbon atoms.

**22.** A dispersion according to any one of claims 1 to 21, which additionally contains a preservative and/or an antifreeze.

**23.** A dispersion according to claim 1, which contains, based on the entire dispersion,
15-50 per cent by weight of component (a),
2-20 per cent by weight of component (b),
0- 5, preferably 0.1 to 3, per cent by weight of component (c),
0-20 per cent by weight of a nonionic surfactant,
0- 8 per cent by weight of a further anionic component other than component (b),
0- 3 per cent by weight of an antifoam,
0- 1 per cent by weight of a preservative and
0-20 per cent by weight of an antifreeze.

**24.** Use of the aqueous dispersion according to any one of claims 1 to 23 for dyeing synthetic fibre materials, in particular polyester fibres or acid-modified polyester fibres.

**25.** A process for dyeing textile material containing polyester fibres with disperse dyes, or acid-modified polyester fibres with cationic dyes, which process comprises dyeing this material in the presence of an aqueous dispersion of a 2-(2'-hydroxyphenyl)benzotriazole compound according to any one of claims 1 to 23.

## Revendications

**1.** Dispersion aqueuse d'un composé du type 2-(2'-hydroxyphényl)-benzotriazole, **caractérisée** en ce qu'elle contient :
(a) 15 à 50 % en poids d'un dérivé du benzotriazole, de formule :

(1) 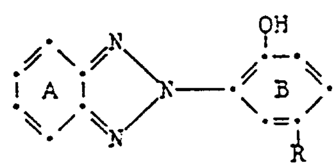

dans laquelle R représente un atome d'halogène ou un groupe alkyle en $C_1$ à $C_{12}$, alcoxy inférieur, alcoxy(inférieur)carbonyle, cycloalkyle, aryle, alkyl($C_1$ à $C_{12}$)aryle ou aralkyle, et les noyaux A et B sont, indépendamment l'un de l'autre, non-substitués ou substitués par un ou plusieurs substituants pris parmi les atomes d'halogène et les groupes hydroxy, alkyle inférieur, alcoxy inférieur et alcoxy-(inférieur)carbonyle, et

(b) 2 à 20 % en poids d'un ester acide d'un produit d'addition d'oxyde d'alkylène, de formule :

(2) 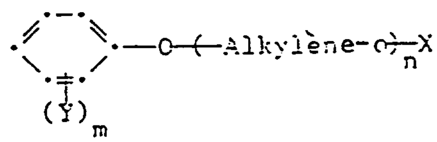

dans laquelle X représente le reste acide d'un acide minéral renfermant de l'oxygène ou le reste d'un acide organique et Y représente un groupe alkyle en $C_1$ à $C_{12}$, aryle ou aralkyle, "alkylène" représente le groupe éthylène ou le groupe propylène, m est égal à 1 à 4 et n est égal à 4 à 50, ou d'un sel d'un tel ester acide.

2. Dispersion selon la revendication 1, **caractérisée** en ce que, dans la formule (1), le noyau A est substitué en position 5 par un atome d'halogène ou un groupe alkyle inférieur ou alcoxy inférieur.

3. Dispersion selon la revendication 1 ou 2, **caractérisée** en ce que, dans la formule (1), le noyau B est substitué par un atome d'halogène ou un groupe alkyle inférieur dans la position voisine de celle du groupe hydroxyle.

4. Dispersion selon l'une quelconque des revendications 1 à 3, **caractérisée** en ce que, dans la formule (1), R représente un groupe alkyle inférieur.

5. Dispersion selon l'une quelconque des revendications 1 à 4, **caractérisée** en ce que, dans la formule (2), Y représente un groupe alkyle en $C_4$ à $C_{12}$, benzyle ou $\alpha$-méthylbenzyle.

6. Dispersion selon l'une quelconque des revendications 1 à 5, **caractérisée** en ce que, dans la formule (2), le reste acide X provient de l'acide sulfurique ou de l'acide orthophosphorique.

7. Dispersion selon la revendication 1, **caractérisée** en ce que le constituant (a) répond à la formule :

(3) 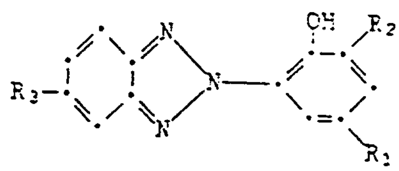

dans laquelle $R_1$ représente un atome d'halogène ou un groupe alkyle inférieur ou alcoxy inférieur, et $R_2$ et $R_3$ représentent chacun, indépendamment l'un de l'autre, un atome d'hydrogène ou d'halogène ou un groupe alkyle inférieur ou alcoxy inférieur.

8. Dispersion selon la revendication 7, **caractérisée** en ce que, dans la formule (3), $R_1$ représente un groupe alkyle inférieur, $R_2$ représente un atome d'hydrogène ou un groupe alkyle inférieur et $R_3$ représente un atome d'hydrogène ou de chlore ou un groupe méthyle.

9. Dispersion selon l'une quelconque des revendications 1 à 8, **caractérisée** en ce que le constituant (b) répond à la formule :

(4) 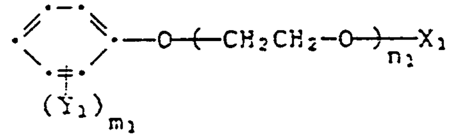

dans laquelle $Y_1$ représente un groupe alkyle en $C_4$ à $C_{12}$, phényle, tolyle, phénylalkyle ($C_1$ à $C_3$) ou tolylalkyle ($C_1$ à $C_3$), $X_1$ représente un reste acide qui provient de l'acide sulfurique ou de l'acide orthophosphorique, $m_1$ est égal à 1 à 3 et $n_1$ est égal à 4 à 40.

**10.** Dispersion selon l'une quelconque des revendications 1 à 9, **caractérisée** en ce que le constituant (b) est un ester acide d'acide phosphorique du produit d'addition par alcoxylation de 8 à 30 moles d'oxyde d'éthylène sur 1 mole de 4-nonylphénol ou de dinonylphénol ou sur 1 mole d'un composé qui a été préparé par fixation par addition de 1 à 3 moles de styrène, d'α-méthylstyrène ou de vinyltoluène sur 1 mole de phénol, de crésol ou de xylénol, ou un sel d'un tel ester acide.

**11.** Dispersion selon l'une quelconque des revendications 1 à 10, **caractérisée** en ce que le constituant (b) est un ester acide d'acide phosphorique du produit d'addition par alcoxylation, de formule :

(5) 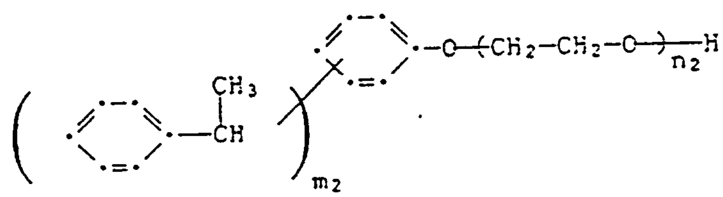

dans laquelle $m_2$ est égal à 1 à 3 et $n_2$ est égal a 12 à 30, ou un sel d'un tel ester acide.

**12.** Dispersion selon l'une quelconque des revendications 1 à 11, **caractérisée** en ce que le constituant (b) est le sel de triéthanolamine, de potassium ou de sodium d'un ester acide d'acide phosphorique du produit d'addition par alcoxylation de 12 à 18 moles d'oxyde d'éthylène sur 1 mole d'un composé qui a été préparé par fixation par addition de 1 à 3 moles de styrène sur 1 mole de phénol.

**13.** Dispersion selon l'une quelconque des revendications 1 à 12, **caractérisée** en ce qu'elle contient en plus, en tant que constituant (c), un stabilisant ou un épaississant.

**14.** Dispersion selon la revendication 13, **caractérisée** en ce que le constituant (c) est une solution aqueuse ou une dispersion aqueuse, à 0,5 à 10 % , d'un acide monocarboxylique ou dicarboxylique, éthyléniquement insaturé, ayant 3 à 5 atomes de carbone, polymérisé, en particulier de poly(acide acrylique).

**15.** Dispersion selon la revendication 13, **caractérisée** en ce que le constituant (c) est un polysaccharide.

**16.** Dispersion selon l'une quelconque des revendications 1 à 15, **caractérisée** en ce qu'elle contient en plus un tensio-actif non-ionique.

**17.** Dispersion selon la revendication 16, **caractérisée** en ce que le tensio-actif non-ionique est un produit d'addition par alcoxylation, de formule :

(5) 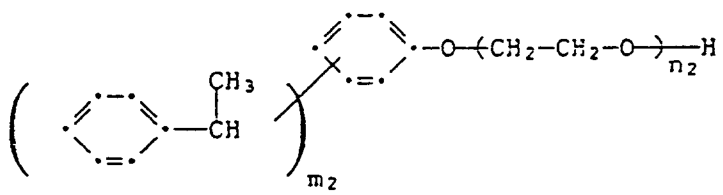

dans laquelle $m_2$ est égal à 1 à 3 et $n_2$ est égal à 12 à 30.

**18.** Dispersion selon la revendication 16, **caractérisée** en Ce que le tensio-actif non-ionique est le produit d'addition par alcoxylation de 12 à 20 moles d'oxyde d'éthylène sur 1 mole d'un composé qui a été préparé par fixation par addition de 1 à 3 moles de styrène sur 1 mole de phénol.

**19.** Dispersion selon l'une quelconque des revendications 1 à 18, **caractérisée** en ce qu'elle contient en plus un autre composé anionique, différent du constituant (b).

**20.** Dispersion selon l'une quelconque des revendications 1 à 19, **caractérisée** en ce qu'elle contient en plus un agent antimousse.

**21.** Dispersion selon la revendication 20, **caractérisée** en ce que l'agent antimousse est un alkylène diamide de formule :

(6) $V_1$ - CO - NH - Q - NH - CO - $V_2$

dans laquelle $V_1$ et $V_2$ représentent chacun, indépendamment l'un de l'autre, un groupe aliphatique ayant 9 à 23 atomes de carbone et Q représente un groupe alkylène ayant 1 à 8 atomes de carbone.

**22.** Dispersion selon l'une quelconque des revendications 1 à 21, **caractérisée** en ce qu'elle contient en plus un agent conservateur et/ou un antigel.

**23.** Dispersion selon la revendication 1, **caractérisée** en ce qu'elle contient, les pourcentages étant rapportés à la totalité de la dispersion :
15 à 50 % en poids du constituant (a),
2 à 20 % en poids du constituant (b),
0 à 5 % en poids, de préférence 0,1 à 3 % en poids, du constituant (c),
0 à 20 % en poids d'un tensio-actif non-ionique,
0 à 8 % en poids d'un autre constituant anionique, différent du constituant (b),
0 à 3 % en poids d'un agent antimousse,
0 à 1 % en poids d'un agent conservateur, et
0 à 20 % en poids d'un antigel.

**24.** Utilisation de la dispersion aqueuse selon l'une quelconque des revendications 1 à 23, lors de la teinture de matières fibreuses synthétiques, en particulier de fibres de polyester ou de fibres de polyester modifiées de manière acide.

**25.** Procédé de teinture de matières textiles renfermant des fibres de polyester ou des fibres de polyester modifiées de manière acide, avec des colorants dispersés ou des colorants cationiques, **caractérisé** en ce que l'on teint cette matière en présence d'une dispersion aqueuse d'un composé du type 2-(2'-hydroxyphényl)-benzotriazole selon l'une quelconque des revendications 1 à 23.